Europäisches Patentamt

European Patent Office

Office européen des brevets

(11) Publication number: **0 129 860**
**A2**

# EUROPEAN PATENT APPLICATION

(21) Application number: **84107141.8**

(22) Date of filing: **22.06.84**

(51) Int. Cl.⁴: **A 47 J 27/122**
**A 47 G 19/30**

(30) Priority: **27.06.83 IL 69078**

(43) Date of publication of application:
**02.01.85 Bulletin 85/1**

(84) Designated Contracting States:
**DE FR GB IT**

(71) Applicant: Beniamin, Beniamin Vasile
Radak-Strasse 6
F-52492 Ramat-Gan(IL)

(72) Inventor: Beniamin, Beniamin Vasile
Radak-Strasse 6
F-52492 Ramat-Gan(IL)

(74) Representative: Glawe, Delfs, Moll & Partner
Patentanwälte
Postfach 26 01 62 Liebherrstrasse 20
D-8000 München 26(DE)

(54) A kitchen pot and a set of a kitchen pots.

(57) A kitchen pot or kitchen utensil has a substantially square shape with rounded corners, a flat lid, and handles or attachable means for a detachable handle received in recesses formed in the sidewalls of the pot and in the lid so as to not project over the outer shape of the pot. In this manner the pots can be placed tigthly side by side or stacked on top of each other in a cupboard, frigidaire etc. within a minimum of available space.

Fig. 1

EP 0 129 860 A2

Beniamin Vasile Beniamin
Radak-Str. 6
52492 Ramat - Gan /Isreal

## A kitchen pot and a set of kitchen pots
--------------------------------------------

Kitchen utensils (pots, casserole pans, saucepans.,) which are used for cooking and storing all kinds of foods are usually manufactured today in a round shape, in the way that has been customarily for many generations. Round pots enable easy cleaning. It is normal to have knobs and handles firmly attached to the utensil and they usually protrude from the pot to ensure that the pot can be held easily. An important part of the pot is in the top which is in many cases domed shape with a knob attached which also protrudes from the top. Sometimes the lid is manufactured in a flat shape.

Kitchen pots are often used not only for cooking food-stuff, but also for temporarily storing cooked or uncooked food-stuff in a  frigidaire, a cupboard , a larder etc.. The usual round kitchen pots having protruding handles or knobs are difficult to store in the reduced space available in a frigidaire etc., and if several pots shall be stored they will inevidably leave dead spaces and therefore create an enormous waste of space in the overloaded fridges or cup-boards.

- 1 -

It is an object of the invention to provide a kitchen pot and a set of kitchen pots which can easily be stored in a fridge etc. with a minimum requirement of space.

According to the invention a kitchen pot having at least one handle is characterized in that the pot has, in plan-view, a square shape with rounded corners and that in at least one of the sidewalls of the pot there is formed a recess or depression in which either a handle is received in a position so as to not project over said sidewall, or an engagement means is formed for detachably engaging a handle member formed separately of said pot.

Preferably said handle is pivotable between a collapsed position and a grasping position in which it projects over said sidewall.

If the kitchen pot is provided with a lid, said lid according to the invention has a substantially flat shape and in the lid there is formed a recess or depression in which either a handle is received in a position so as to not project in said sidewall, or an engagement mean if formed for detachable engaging a handle member formed separately of said pot.

- 3 -

Kitchen pots are often provided as a set of similar pots having different volume sizes. According to a further aspect of the invention a set of kitchen pots, formed in accordance with the invention, is characterized in that all the pots have the same height and differ only in the width dimension, with the difference  at least corresponding to the depth of said recesses or depressions so as to allow the pots of different sizes to be nested one within the other. By providing an equal height of the pots, inspite of their different volume size, pots stored side by side in a fridge of cupboard present a continuous flat upper surface, without steps, on which surface further pots or articles can be placed. This, of course, is also rendered possible by the above-mentioned shape of the lid.

Embodiments of the invention are shown in the accompanying drawings.

Fig. 1    shows a view, partially in section, of a pot with a lid according to one embodiment of the invention.

Fig. 2    shows a schematic sectional view of a set of pots.

Fig. 3    shows plan-views and sectional views of other embodiments of pots and corresponding lids.

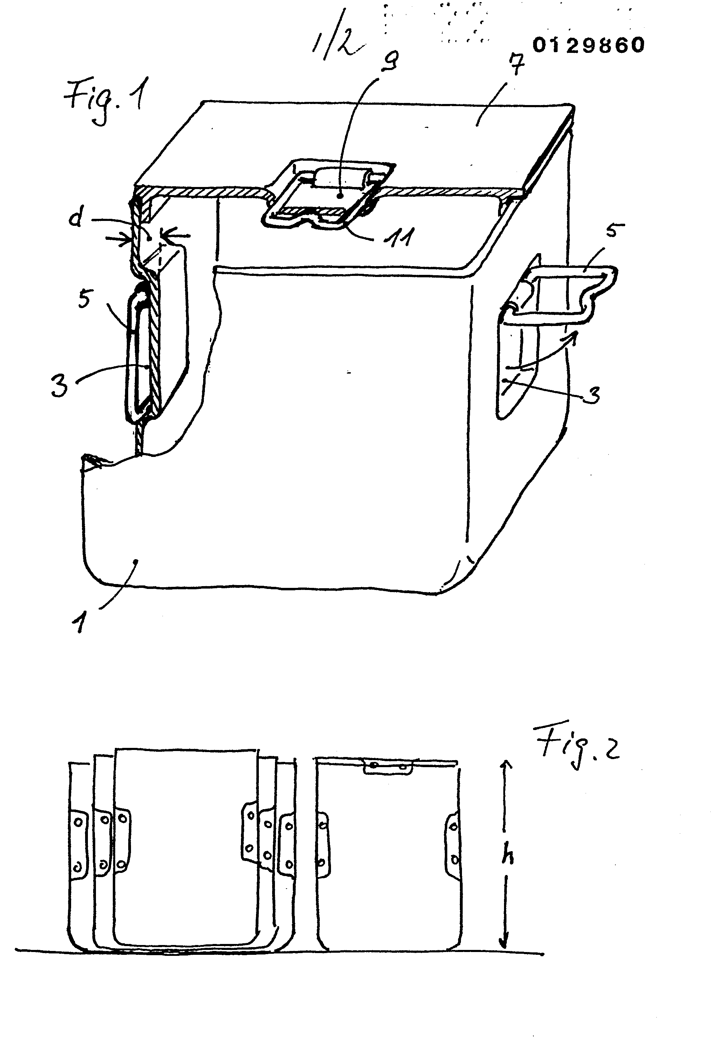

According to fig. 1 the pot 1 is substantially square in plan-view with vertical sidewalls. The edges and corners of the pot are rounded. In two diametrically opposed sidewalls there is formed an inwardly recessed depression 3 in which a handle 5 is pivotally mounted so as to be pivotable between a collapsed position in which it is fully received in the recess 3 and does not protrude over the sidewall of the pot, and a grasping position, in which it projects over the sidewall.

The lid 7 which is placed on top of the pot 1 has a completely flat upper surface with a recessed depression 9 formed in the lid for receiving a handle 11 in a manner analogous to that described in connection with a handle 5 of the pot.

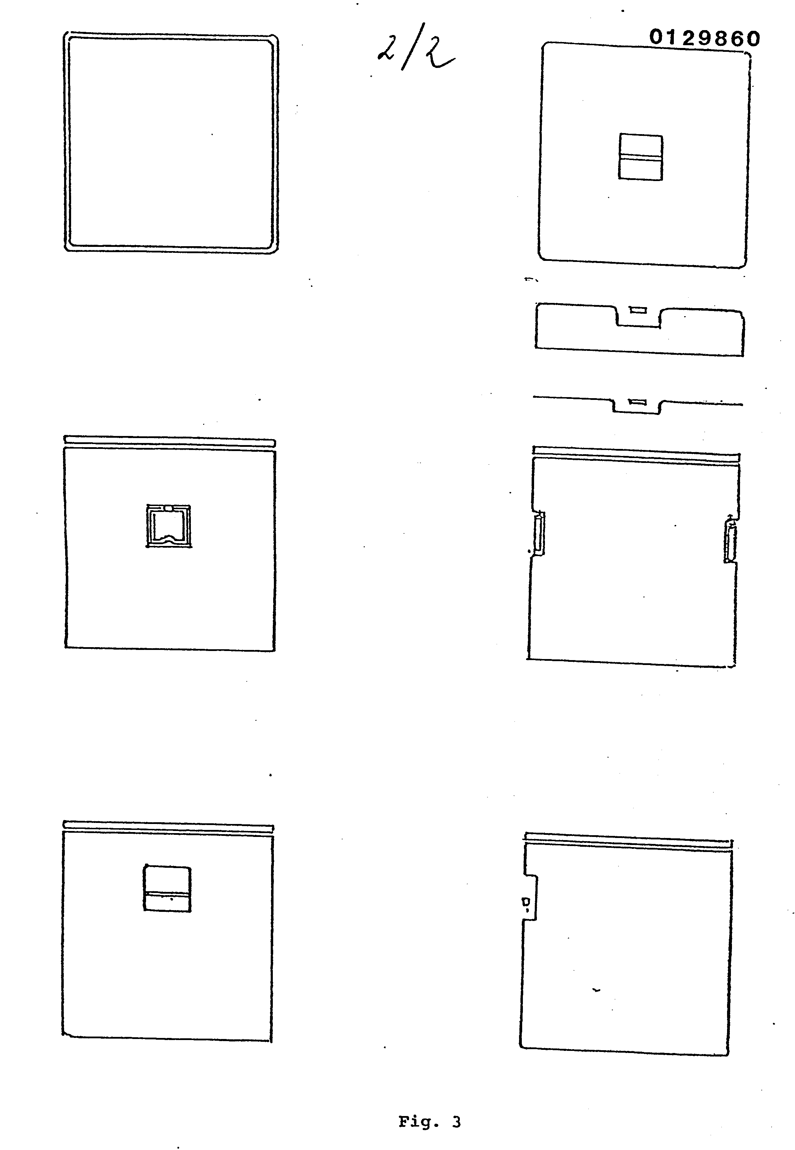

Fig. 2 schematically shows a set of kitchen pots having different volume sizes, for example pots having a capacity of one liter, two liters, three liters etc.. All the pots have the same height h and differ only in their width dimensions. The differences are such as to leave a spacing at least as wide as the depth d of the depressions 3 (fig. 1), so as to allow the pots to be nested one within the other as shown in fig. 2. When placed side by side, the pots, regardless of their different size, will present a continuous upper surface for placing thereon further articles.

In fig. 3, in the upper part, there is shown substantially the same pot as in fig. 1. In the lower part there is shown a pot where in each recess in a sidewall there is not povided a pivotable handle, but merely horizontal bar spanning the recess. This bar serves as an anchoring means for detachably attaching a separate handle member (not shown). Also the lid which is shown in the upper right corner of fig. 3 has such a bar for attaching a separate handle member, rather than a pivotably mounted handle. Also, the lid can be either fully flat or can have a depending sculp (third and second drawing from the top in fig. 3).

Taking into consideration modern technology there should be no difficulty to manufacture the shown pots comprising collapsable handles etc. or to manufacture the pots without handles with the possibility of detachable handles. These pots or utensils can be stored easily where there is a shortage of space or can be stacked one on top of the other owing to the flat shape of the lid, especially if the lid does not add to the height of the pot.

The main points of the invention can be summarized as follows: Manufacturing pots (kitchen utensils) in a square shape with rounded corners where the handles are received within the shape of the pot. The handles can be collapsed so that they do not takeup unnecessary space. The handles can be lifted-up to a fixed position when the user desired. Lifting-up the handle for use and returning it to its collapsed position can be made possible by a special shape of the handle which will enable the handle to remain in a fixed grasping position. Pivoting the handle can be assisted by using a spring, ball-bearing etc. or by pressing a bottom.

Advantageously the lid has a width extending about two milimeters over the edge of the pot. This will ensure a small distance between the pots when stored in the frigidaire. This distance will enable the cooling air to pass between the pots.

It shall be noted that the idea of the invention, namely to arrange the handles within depressions in the pot, can also be used with pots which have, in plan-view a round shape.

Claims
-----------

1.    A kitchen pot having at least one handle, c h a r a c - t e r i z e d  in that the pot (1) has, in plan-view, a square shape with rounded corners and in that in at least one of the sidewalls of the pot there is formed a recess or depression (3) in which either a handle (5) is received in a position so as to not project over said sidewall, or an engagement means is formed for detachably engaging a handle member formed separately of said pot.

2.    A kitchen pot as claimed in claim 1 , c h a r a c - t e r i z e d  in that said handle is pivotable between a collapsed position and a grasping position in which is projects over said sidewall.

3.    A kitchen pot as claimed in claim 1 or 2 and having a lid, c h a r a c t e r i z e d  in that said lid (7) has a substantially flat surface in which a recess or depression (9) is formed in which either a handle (11) is received in a position so as to not project over said surface, or an engagement means is formed for detachably engaging a handle member formed separately of said lid.

4.    A set of kitchen pots having different volume sizes, each pot as claimed in one of claims 1 to 3 , c h a r a c - t e r i z e d  in that the pots have substantially the same height (h) and differ only in their width dimensions, the differences corresponding to the depth (d) of said depression or recesses in the sidewalls so. as to allow the pots to be nested one within the other.

1/2

0129860

Fig. 1

Fig. 2

2/2

0129860

Fig. 3